Europäisches Patentamt

European Patent Office

Office européen des brevets

(19)

(11) Publication number:

**0 364 138**
**A2**

## (12) EUROPEAN PATENT APPLICATION

(21) Application number: 89309971.3

(22) Date of filing: 29.09.89

(51) Int. Cl.⁵: **G05B 19/417**

(30) Priority: 13.10.88 IT 6791888

(43) Date of publication of application:
**18.04.90 Bulletin 90/16**

(84) Designated Contracting States:
**DE**

(71) Applicant: **OLIVETTI PRODOTTI INDUSTRIALI S.P.A.**
**Strada Provinciale Tavernetta**
**I-81025 Marcianise (CE)(IT)**

(72) Inventor: **Bausano, Tullio**
**Via Circonvallazione 23/1**
**I-10018 Pavone (TO)(IT)**

(74) Representative: **Pears, David Ashley et al**
**REDDIE & GROSE 16 Theobalds Road**
**London WC1X 8PL(GB)**

(54) **Architecture of an integrated system for the control of an industrial manufacturing works.**

(57) The system comprises at least one manufacturing cell (24) constituted by a series of working and materials moving machines (53A-D) controlled by corresponding programmable control units. These units are handled in groups by personal computers (49, 49') for direct handling of the group. These personal computers are connected to a local data transmission network (48), to which is connected another personal computer (47) handling the cell and possibly a personal computer (85) with a graphics VDU (83) for visual handling of the status of the system.

The personal computers are provided with a monofunction operating system which is standard in industry, to which is added at least one program level for support of industrial applications comprising various modules adapted to define the environments of various personal computers. The computer (47) handling the cell comprises a file module in which are recorded lists containing the static and dynamic information on the machines (53A-D) and the manufacturing processes, because of which each application program is easily compiled by entering in a module for description of the machining the names of the individual machines and of the co-involved individual manufacturing processes.

FIG-3

## Architecture of an integrated system for the control of an industrial manufacturing works

The present invention relates to the architecture of an integrated system for the control of an industrial manufacturing works, as defined in the preamble of claim 1.

The progress achieved in the field of data processing and data transmission has allowed the realization of various types of integration in the control of the working machines of a factory. In a known system, the various control units, controlled by slave processing units, are connected to a central computer which acts as a master. This system has the drawback of centralized systems, in which controls at the processing units must be commanded individually by the central computer in time sharing and/or by means of addressing, selection and interruption techniques. Moreover, the possible stopping of the central computer causes the entire system to stop. In another system, known from Italian Patent No. 1156044, control of an industrial manufacturing works has been proposed in which the various devices to be controlled are subdivided into groups of uniform devices and the various control units of the said groups are connected through a system channel to a central memory and to a group of processing units to constitute selectively different subsystems with distributed intelligence. This system has the drawback of having to specialize the various processing units for each plant and of having to create for each of them an operating software which is specific for the devices to be controlled.

From U.S. Patent 4,714,995 there is also known an integrated system of computers which are connected to a local data transmission network for the control of a flexible manufacturing works, including a section for CAD (computer-aided design), CAM (computer-aided manufacturing), CAE (computer-aided engineering) and MRP (manufacturing resource planning) for the control of the flow of materials and processes in the manufacturing system.

These drawbacks and others are obviated by the integrated-system architecture of the invention, which is organized in handling cells and is defined by the characteristic of claim 1.

According to another characteristic of the invention, the monofunctional operating system of each personal computer of the handling cell is modified by a level for support of industrial applications which is such as to allow a multifunctional system. A module of such level comprises a file containing the characteristics of a series of manufacturing and materials moving machines or devices and the characteristics of a series of manufacturing processes, because of which the programming of a specific manufacturing operation is effected simply by entering in a module for description of the manufacturing operation the names of the individual machines and of the individual manufacturing processes.

These characteristics and other characteristics of the invention will appear more clearly from the following description of two embodiments, which is given by way of example, but non-limitatively, with the aid of the accompanying drawings, in which:

Fig. 1 is a basic diagrammatic representation of the logical organization of a works or factory incorporating the integrated control system of the invention;

Fig. 2 is a diagrammatic representation of the architecture of the integrated control system of Fig. 1;

Fig. 3 is a diagrammatic representation of a manufacturing cell according to a first embodiment of the invention;

Fig. 4 is a diagrammatic representation of a manufacturing cell according to another embodiment of the invention;

Figs. 5 and 6 are two diagrams of the program levels of the cell;

Figs. 7 and 8 are two diagrams of program modules;

Fig. 9 is a diagram of the distribution of the programs and of the exchange of data in the manufacturing cell;

Fig. 10 is a diagram of the acquisition of data by the cell handling computer;

Fig. 11 is a basic logic diagram of the flow of machining of the cell of Fig. 3.

### Introduction

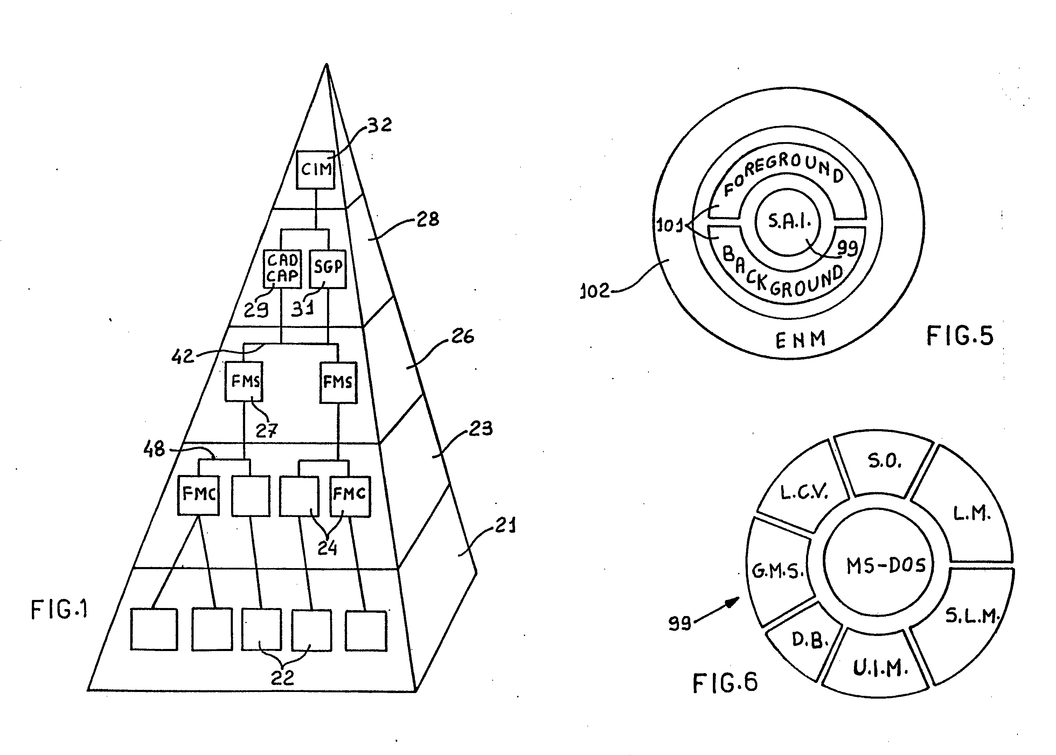

The logical organization of the various working machines and control units of an automatic industrial manufacturing works or factory can be represented by the pyramid of Fig. 1. In it, at the lowest level 21,there is arranged a series of working or machining and materials moving devices or machines 22, for example mechanical machining centres, handling centres or robots, trolleys for transporting parts or tools, assembling machines, machines for operations in various industries, such as the textile industry, the chemical industry, etc. Each of these centres, trolleys or machines is controlled by a control unit.

At a level 23 immediately above there is arranged a plurality of control systems 24, each adapted to coordinate the operations of a group of machining centres, trolleys or machines 22, with which it constitutes a "flexible manufacturing cell" (FMC). On a third level 26 there is arranged a plurality of control systems 27 for flexible functional manufacturing areas (FMS), in each of which a plurality of cells 24 is integrated. Each area 27 handles hierarchically higher functions, such as, for example, planning.

A fourth level 28 comprises at least one computer-aided design (CAD) or production (CAP) unit 29 and a computer-aided production handling (SGP) unit 31. At the apex of the pyramid there is arranged the integrated control centre 32 (CIM) of the entire works or factory for the supervision of the whole system.

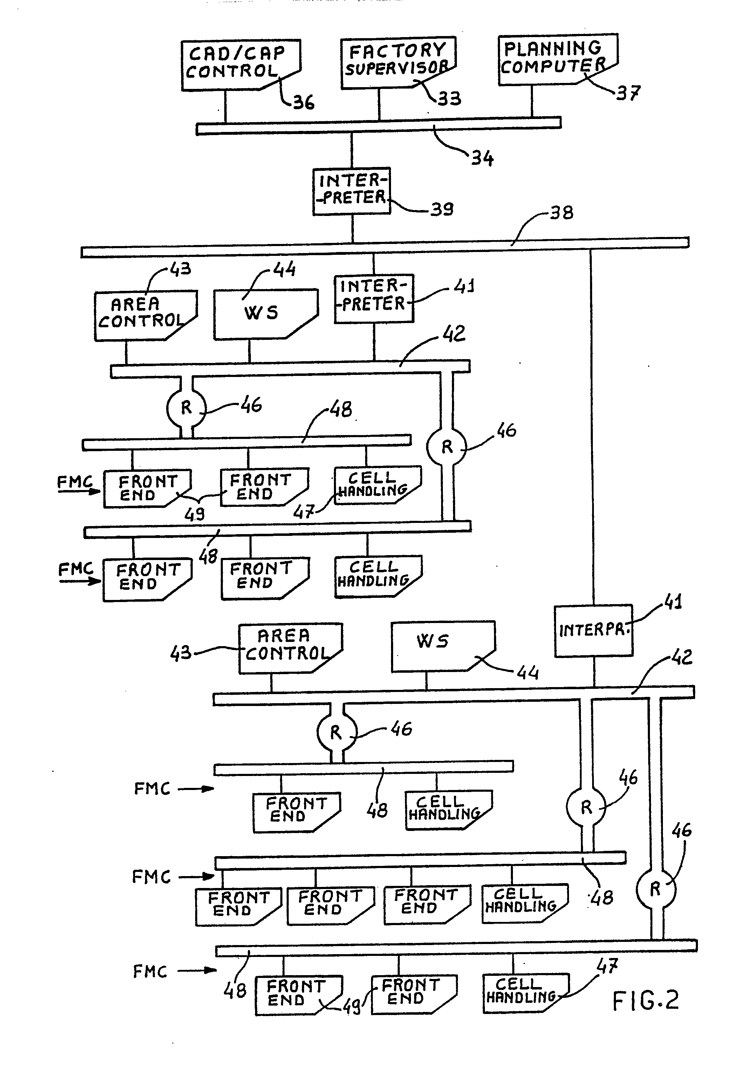

Fig. 2 shows diagrammatically an integrated control system of a factory organized in accordance with the hierarchical diagram of Fig. 1. The integrated control centre 32 comprises comprises a central computer 33 for supervising the factory, in general a minicomputer. This is connected, through a first data transmission network 34, for example a local contentious access (CSMA/CD) network, to a computer 36 controlling the CAD/CAP unit 29 and to a planning computer 37 for the handling unit SGP 31, whereby the network 34 constitutes the network of the factory information system.

The local network 34 is connected to a second data transmission network 38, for example a packet transmission network of the token passing type, by means of a unit 39 interpreting data between networks of different types. Through a series of interpreters 41 (two in Fig. 2), the network 38 is moreover connected to a corresponding series of local data transmission networks 42, each operating in the ambit of a manufacturing area FMS 27. Each network 42 connects a computer 43 controlling the area, which is associated with one or more work stations 44, and a group of repetition units 46 connecting cells FMC 24.

Each cell FMC 24 is controlled by a computer 47 handling the cell, which is connected, through a local network 48 for transmission of data of the cell, to a plurality of computers 49 for direct control of the individual manufacturing or materials moving machines 22, for which reason these computers will hereinafter be called front end controllers.

## Flexible Manufacturing Cell

The characteristic element of the architecture is the flexible manufacturing cell (FMC).

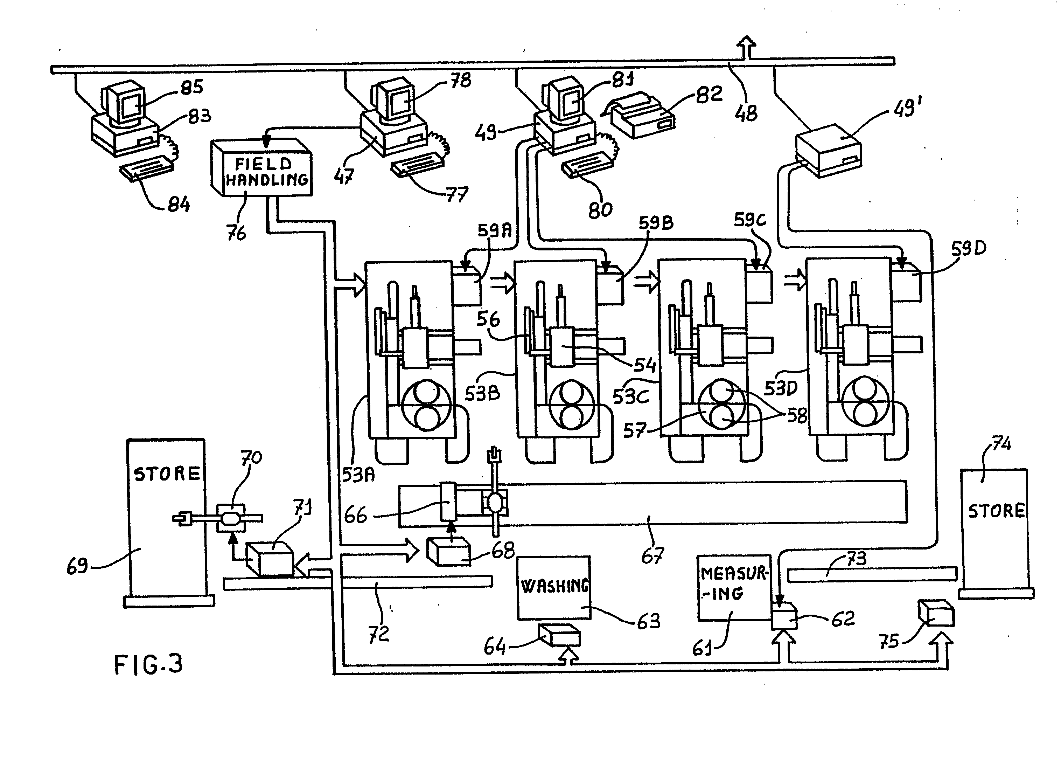

According to a first embodiment of the invention shown in Fig. 3, the manufacturing cell 24 of an engineering works comprises four machining centres 53A, 53B, 53C and 53D, each having a headstock 54 with a tool spindle movable along three coordinates and a tool magazine 56 associated with an automatic tool changing device. A plate 57 rotatable each time by 180° is equipped with two rotating worktables 58 for allowing loading and unloading of the parts on a rotating table during the machining of the part on the other rotating table. Each of the four machining centres 53A-53D is controlled by a corresponding control unit 59A-59D of known type providing numerical control.

The cell 24 moreover comprises a measuring station 61 controlled by a corresponding control unit 62 and a washing station 63 controlled by another control unit 64. The parts to be machined are brought to the machining centres 53A-53D and to the stations 61 and 63 by a parts moving robot 66 movable on a rail 67 and controlled by a corresponding control unit 68. The cell 24 furthermore comprises a store 69 for the parts to be machined and a parts selection and withdrawal station 70,controlled by another control unit 71,for feeding the parts to the robot 66 through the medium of a conveyor belt 72. A second conveyor belt 73 is adapted to receive the machined parts from the robot 66 and these are then deposited in a store 74. Control of the various control units 59A-59D, 62, 64, 68, 71 and 75 is effected through a series of computers 47, 49, 49' connected by means of the local data transmission network 48 of the cell. More particularly, in the cell 24, the computer 47 handling the cell 24 is connected to a field handling unit 76 for controlling the sensors of the individual machines and handling the units 64, 68 and 71. The computer is provided with a keyboard 77 and a VDU 78, because of which it will be controllable manually by an operator, for example a foreman.

The two front end computers 49, 49', on the other hand, are connected directly to two groups of control units for handling them according to the data supplied by the computer 47. The front end computers 49, 49' are programmed so as to establish the hierarchy with the cell handler 47 and to handle communication with the units connected to them autonomously, in case of malfunctioning of the cell handling computer 47. In this case, moreover, control of the plant can pass to the field handling unit 76.

The computer 49 is connected to the control units 59A, 59B and 59C of the respective machining centres 53A, 53B and 53C and has the function of master, for which reason it is provided with a keyboard 80, a VDU 81 and a printer 82. It can be controlled manually by an operator, for example a person charged with running the system. The computer 49' is connected to the control unit 59D of the centre 53D and to the control unit 62 of the measuring apparatus 61 and has only a slave function, for which reason it does not need an operator. Finally, to the network 48 there is connected a visual handling computer 83, which is provided with a keyboard 84 and a graphics 85 adapted to effect the processing of images in real time. The computer is programmed for the function of visual monitoring of production, that is to say of operation of the various machines and units (inspection) and also for graphic visual display of quality data.

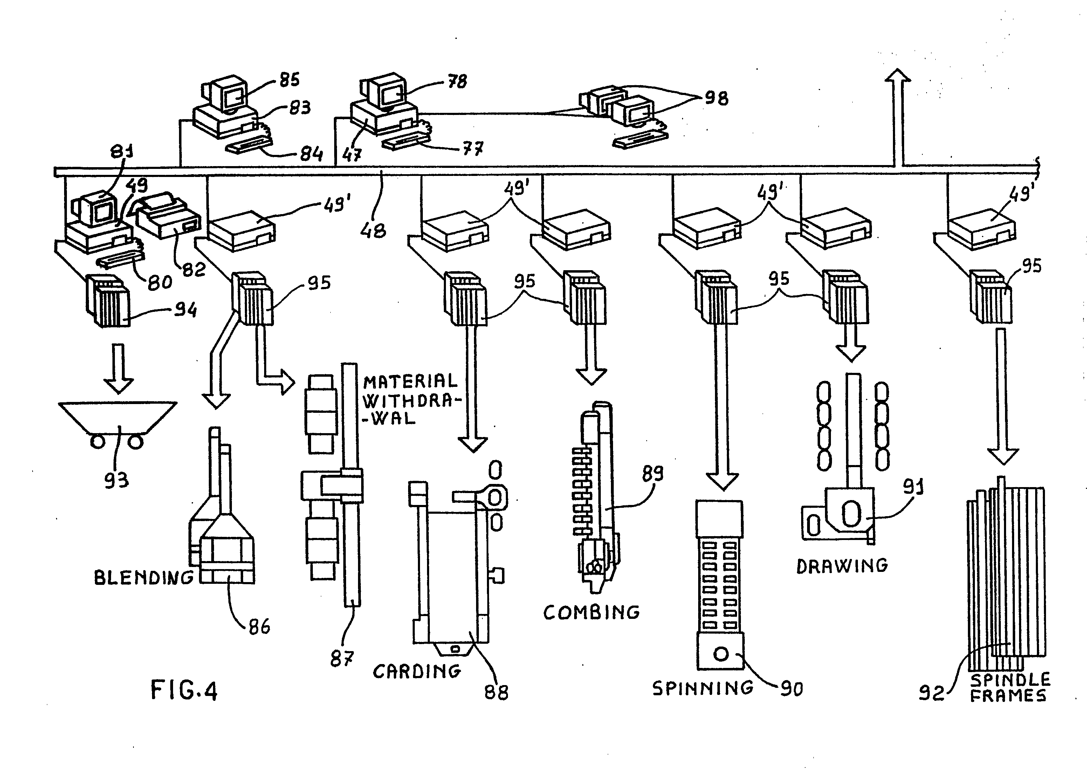

According to another embodiment of the invention shown in Fig. 4, the manufacturing cell 24 of a textile industry comprises a blending apparatus 86, a material withdrawing apparatus 87, a carding engine 88, a combing machine 89, a spinning machine 90, a drawing frame 91, a series of spindle frames 92 and a materials moving truck 93.

The truck 93 is controlled by a front end computer 49 with a master function through one or more industrial terminals 94 which allow the operator to enter orders and command the loading and unloading of materials. The computer 49 is provided with a keyboard 80, a VDU 81 and a printer 82.

Each machine 86-92 is controlled by a corresponding front end computer $49'$ with a slave function through one or more industrial terminals 95 for entering commands. The computers 49 and $49'$ are connected to the local network 48 for transmission of data of the cell.

To the network 48 there is moreover connected the computer 47 handling the cell, which is provided with a keyboard 77 and a VDU 78 and can receive the data from a corresponding group of terminals 98 for operators. The computer 47 has the function here of a master with respect to the computers $49'$. Finally, there is connected to the network 48 a computer 83 for visual handling of the cell, which is provided with a keyboard 84 and a graphics VDU 85. The computers 47, 49, $49'$ and 83 may be constituted by any personal computers which are standard in industry, for example the so-called compatible personal computers based on the MS-DOS operating system, which is of monotasking type. More particularly, such personal computers may be constituted by the models M240, M280, M290, M380 produced and marketed by the Olivetti group, which may be provided with the hardware for processing high-resolution graphic images and for connection in the network.

The local network 48 to which the computers 47, 49, $49'$ and 83 are connected comprises a channel or carrier which is accessed directly by the computers by the contention system with polling of the carrier (CSMA/CD method of access). For example, the network of the Ethernet (registered trade mark) type may be used or the network marketed by the Olivetti group under the name OLINET, modified to make it suitable for industrial applications in accordance with modern MMS-FTAM communication standards of the European MAP.

### Programming of the Cell

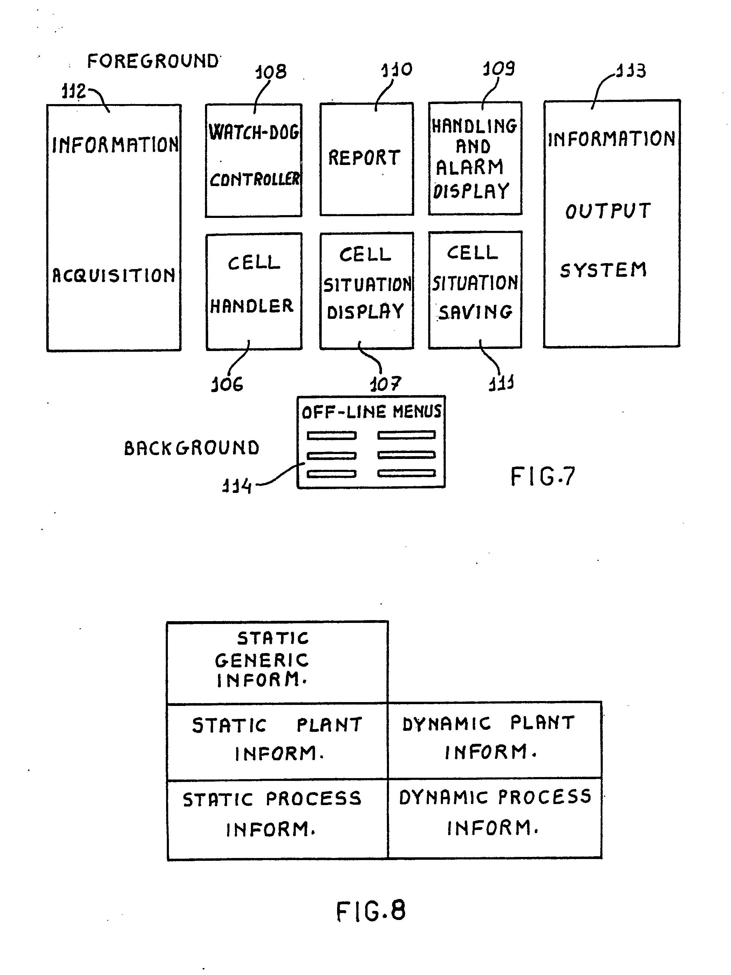

Each of the computers 47, 49, $49'$ and 83 is provided with at least one disc memory unit for data and programs. These programs are organized in layers disposed at different hierarchic levels. The innermost core is an operating system 99 (Fig. 5), is of the multitasking type, with real time of support of industrial applications, and will hereinafter be called SAI. It is obtained starting from the MS-DOS kernel (Fig. 6), by modifying the higher levels thereof so as to be able to handle in real time data, application programs, alarms and communications on the local network.

The SAI 99 is constituted by a library of software routines retrievable directly from the application programs of the higher levels. These can be written utilizing the more widespread programming languages, such as Fortran, C, Basic, Assembler and others. The SAI 99 comprises the following modules:
- Operating System true and proper S.O., for handling in real time any number of concurrent tasks, by supplying the necessary primitives of communication and synchronization.
- System Data Base D.B., for the data file in accordance with a hierarchical structure and the handling of the data with functions of easy use. This data may also reside in the central memory, apart from on disc, in order to allow more rapid access thereto.
- Serial Lines Handler S.L.M., for communications between the software environment and possible devices provided with serial lines of communication.
- Local Network Manager (L.M.), for handling the local network 48.
- User Interface U.I.M., for the interface between the user and the system, which allows the same terminal to be shared between the various tasks (multivideo/multikeyboard handling) and conversation with the remote industrial terminals.
- Graphic and Mathematical Support G.M.S., comprising an assembly of graphic primitives with which it is possible to obtain VDU frames, images and elementary and compound figures. The mathematical support makes available a complete library of mathemical functions.
- Vision support L.C.V., for the conversation between visual and image processing units connected in the network for applications of inspection, quality control and so on.

Above the SAI 99 (Fig. 5) there are another two software levels which facilitate the development of applications constituted by a plurality of concurrent tasks. An environment definition level 101 permits the development of the environment both with always active applications and with applications activated on request of the operator. A network events handling level ENM 102 realizes the communication environment between tasks by activating the latter as a function of the events which gradually occur. A very simple definition of the map of relations between the tasks which is made at the level 101 enables the user to realize rapidly the proper application program for handling the process at the level 102, relieving him of the problems appertaining to the architecture of the software.

The level 101 comprises a FOREGROUND, the always active applications of which are responsible for the handling of the plant in real time. They are activated by events which may be instigated both by the external process and by other already active tasks. The functionalities of the FOREGROUND modules or procedures, which are shown diagrammatically in Fig. 7, are listed hereunder.

- Cell handler 106: has the task of handling the movement of pallets, tools and addition material. Chooses and executes the missions of movement as a function of the priority of the pallets and of the machines to be served, following the directives at higher level which are specified in the application program by the operator or originating from the planning system.

- Visual display of cell situation 107: allows the general situation of the plant to be visually displayed and updated during production.

- Watch dog controller 108: allows the status of the hardware to be checked constantly by comparing it with the configuration stated at the starting of the system.

- Handling and visual display of alarms 109: allows possible alarms to be analyzed and undertakes the necessary countermeasures.

- Report 110: collects and puts in order the information relating to production and the history of the machines.

- Cell situation saving 111: saves the image of the system on the disc of the computer 47 at the request of the operator.

- Information acquisition 112: collects the messages originating from the outside world to the cell and presents them to the applications which make a request therefor.

- Information output 113: routes the messages coming from the applications towards the external lines.

The level 101 (Fig. 5) moreover comprises a BACKGROUND environment, the functions of which are activated on request of the operator and serve for help to the operator. It produces the operator-machine interface by means of a complete set of off-line menus and dialogue frames 114 (Fig. 7), by means of which the user can obtain all the desired information.

The handling software of the cell comprises a principal module, which will hereinafter be called the MASTER, or which resides chiefly in the computer 47. This name therefore does not imply that it be applied to the computer 49 having the function of master among the various front end computers of the cell. The MASTER is constituted by a set of applications, each of which performs a precise function, The applications of the MASTER necessitate a sufficiently versatile data structure capable of being able to describe an even very complex plant. At the same time, it is necessary to ensure access to the data which is sufficiently rapid for following the cell events. For this reason, a file resident in the D.B. module of the SAI 99, which has a suitable data structure, has been developed. This structure is organized in lists, which are grouped in "types" and "systems" (three-level structure). Moreover in this structure it is possible to associate a pointer temporarily with an element thereof in order to have still faster access to the data.

More particularly, the data in the file is grouped in five "systems", some of which give information of "static" type, which is constant for the entire life of the plant, while others are concerned with dynamic information linked to the image of the system and to the state of progress of production. Referring to Fig. 8, the following "information systems" are defined:

- Static Generic Information: gathers together the information relating to the structure of a generic plant and of its manufacturing processes, in the most general form possible.

- Static Plant Information: describes the particular plant chosen by the customer, in all its mechanical and electronic components, relative to the information of static type.

- Static Process Information: gives the list of machining cycles and of the products which the cell will be able to make in the course of its life.

- Dynamic Plant Information: gathers together all the information describing the current situation of the plant, in particular the position of the pallets and tool racks at the present moment and the status of the machines and of all the components ("image of the system").

- Dynamic Process Information: describes the current state of progress of work, that is to say the set of machining operations which have been carried out on each single pallet present in the system and the total number of pallets produced in the batch being machined.

The systems are structured as a set of lists of homogeneous content. A list may refer to other lists in which are collected the attributes of its elements, thus avoiding a possible burdensome duplication of information. It is possible to describe complex plants with different types of pallets, each of which is compatible with a subset of the physical positions of the plant; the machine tools may have pallet stores and tool magazines, the trolleys or trucks may have a different number of positions, etc.

The Static Generic Information System is conceived as a collection of instructions which the user will have to give to the system in the configuration stage of the plant. The commands supplied by the user are utilized by the MASTER for generating the "static" files of a plant and of manufacture. Obviously, the choice of commands already constitutes a first limitation on the variability of the types of plant and machining operations handled. The commands are therefore written in a suitable "macrolanguage" which allows a possible amplification thereof.

The Static Plant Information System comprises the information of the network, the peripherals, the plant (composition, arrangement, connection) and the units (description of all the subsystems present, such as the machine tools, the transport systems, the tool magazines, the buffer stores).

The Static Process Information System concerns operations which relate to three different entities: the parts to be machined, the tools and a possible addition material. The information is therefore divided into "manufacturing processes", "instrumental processes" and "addition processes".

The handling software reflects this distinction and is constituted in reality by three simultaneously active applications, with three different and complementary functions:

1) The application relating to the "manufacturing processes" is concerned with moving the pallets containing the parts to be machined on the various machine tools, on the basis of the dynamic information relating to the status of the pallets, free machines, machining cycle of the pallets and so on.

2) The application relating to the "instrumental processes" is concerned with supplying the machine tools with the tool containers placed in a possible store or magazine common to the cell; the movement of tools may be effected with the same trolleys for the part-carrying pallets or with a separate system.

3) The application relating to the "addition processes" supplies the machines with possible addition material (screws, connecting components, etc.).

The Static Process Information systems comprise the following types of processes:
- Manufacturing processes: to each of these there corresponds one of the possible "products" of the cell (e.g. a "reduction gear"), each of which may have several components (e.g. "shaft, case, gears").
- Subprocesses: each describes one of the components of the manufacturing processes (example: the "case" of the reduction gear) which may be machined independently of the others.
- Agglomerates: each describes the indivisible objects which are moved in the plant: An agglomerate may be formed by a pallet, a series of jigs and a set of not necessarily like parts to be machined, that is to say a set of subprocesses.
- Moments: an agglomerate passes through a series of machine tools which change the state thereof; to this is given the name of "moment". In other words, a "moment" is identified with an agglomerate which has undergone a given set of technological operations.
- Situations: it is possible that an agglomerate which is in a given state (moment) may evolve into one or more successive moments, according to criteria of choice which are specified by the user; each possible transition, caused by a certain machine tool and by a given partial program, is chiled a "situation".

The Dynamic Plant Information System is not compiled directly by the user, but by the MASTER, on the basis of the file of Static and Dynamic Plant Information acquired at any instant. It is able to store the status of the machines (on-line/off-line/hold/running, etc.), the position of the pallets in the system, the list of alarms and the composition of tool magazines and tool status.

The Dynamic Process Information System, finally, reports the status of the pallets in process of machining, that is to say their "moment", and also the historical data relating to the current batch, such as the number and the percentage of the parts made, rejected, missing, and the degree of balancing relating to the mix in the batch.

The subdivision of the applications of the Static Process Information enables problems to be solved separately with considerable simplification of the algorithms and better variability of the system. Obviously, suitable synchronization of the applications is provided for,such as the allow the transfer of information of common interest. The programming of a specific production is effected simply by entering in a module describing the production which is contained in the level ENM 102 (Fig. 5), the names of the individual machines and of the individual manufacturing processes, the descriptions of which are stored in the Data Base.

The MASTER module realizes a software product of general use which can be given its configuration by the user and directed at the handling and monitoring of flexible manufacturing systems (FMS). It is constituted by a set of simultaneously active software modules, each of which performs a specific function. The user can interact with the system at different levels by means of a series of menus of options. The MASTER module therefore carries out in sum the following functions:
- handling and supervision of a flexible machining cell;
- flexible entry of manufacturing plans with the possibility of modifications on the part of the user;
- plant monitoring and control of manufacturing progress.

Such functions are ensured for a wide typology of manufacturing plants and processes, ranging from the simplest situations, characterized by few machine tools served by a single trolley as in the cell of Fig. 3, to most complex situations with different machine tools, multiple movement systems and tool magazine handling.

For example, the MASTER, basing itself on the parameters of choice relating to a given moment, chooses a situation or a route to follow in the machining. This choice is conditioned by various factors such as the correct functioning of the machine, the presence of the necessary tools, etc. Therefore, each stage of the process will have available a tree of choices in which the nodes are represented by the moments, interconnected by the situations. At the root of the tree there is the moment corresponding to the rough state of the part.

Both the computer 47 handling the cell and the front end computers 49 and 49' and the computer 83 handling visual display come provided with the software module SAI 99 (Fig. 5). On the other hand, the foregound and background level 101, in which is comprised the MASTER module, is different for the computer 47 and for the computers 49, 49' and 83. More particularly, the MASTER module comprises a part, including the Static Generic Information and the Static and Dynamic Process Information, which is contained in the memory of the cell handling computer 47. Another part of the MASTER, including the Static and Dynamic Plant Information, is recorded, on the other hand, in the disc unit of the front end computers 49, 49'. More particularly, the data relating to the handling of the connected machines, the partial programs and the alarms is recorded in the front end computers.

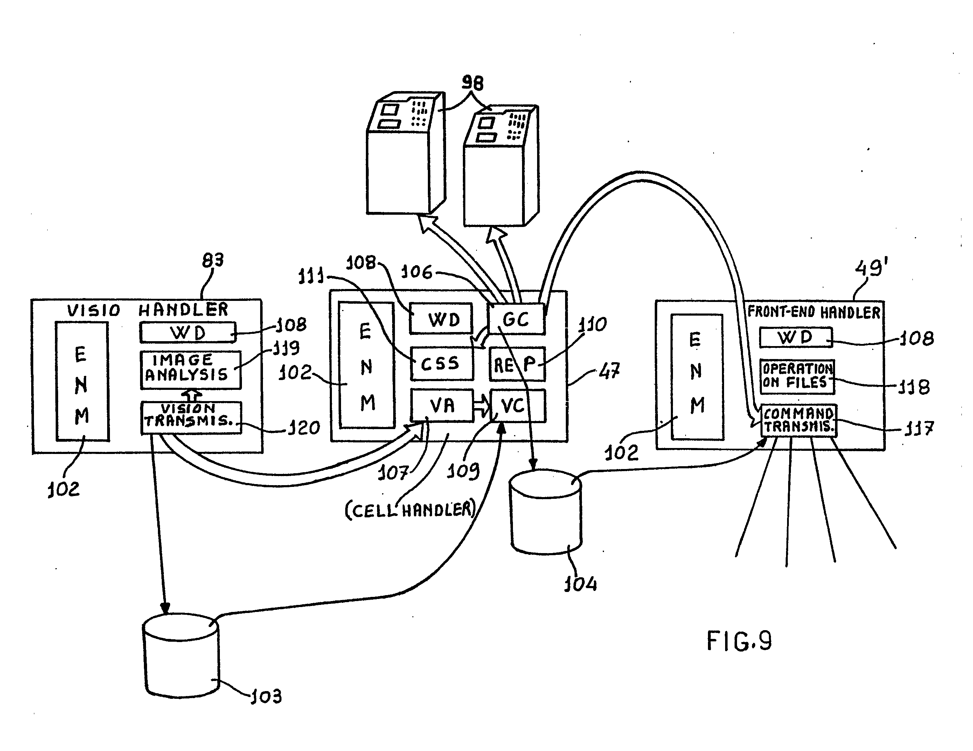

As regards the foregound, by way of example, Fig.9 shows diagrammatically a subdivision of the software modules in the memories of the cell handling computer 47, a front end computer 49' and a vision handling computer 83.

Apart from the SAI 99 and the part of the MASTER of the cell handler defined before, the computer 47 is also provided with the level ENM 102 and with the modules 106, 107, 108, 109 and 110 described with reference to Fig. 7. The computer 49' is provided, apart from the module SAI 99 and the part of the MASTER of the front end computer defined before, also with the level ENM 102 and with the module 108 described with reference to Fig.7. Moreover, it is provided with a module 117 for transmission of commands to the machines and with a module 118 for operations on the files. Finally, the computer 83 is also provided, apart from the SAI 99 and part of the MASTER, with the level ENM 102 and the module 108. Moreover, it is provided with an image analysis module 119 and with a vision data transmission module 120, for which reason it is used predominantly for purposes of inspection and quality control on-line. Also indicated in Fig. 9 are the flows of data which come processed by the modules from the various computers 47, 49' and 83 with the aid of two disc units 103 and 104 of the computer 47. There are moreover indicated two terminals 98 for operators which are controlled by the cell handling module 106 for handling loading/unloading stations. In conclusion, the duties of the cell handling computer 47 consist in handling the front end computers 49, 49' and the operator terminals 98 through the local network 48.

The duties of a front end computer 49, 49' consist in handling the traffic of information which goes to and/or comes from the cell handling system, the operators and the working units. Checks on the validity of messages, routeing and adjustment to the features required by the respective consignees are the responsibility of the front end.

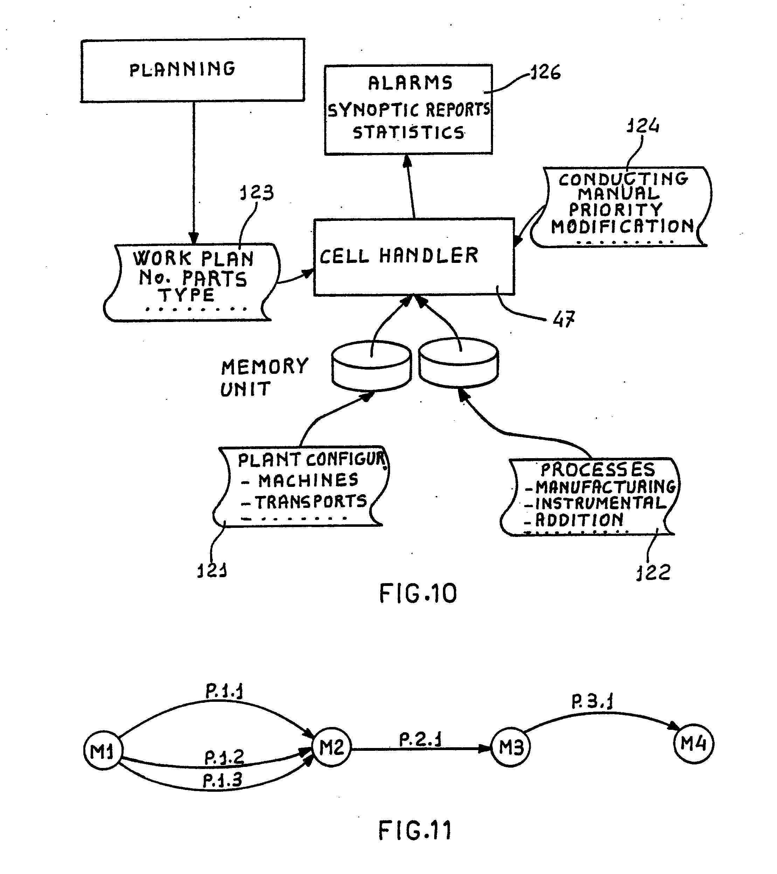

The configuration of the software for the computer 47 for operative handling of the cell can be represented diagrammatically as in Figure 10. As the first thing, it is necessary that an operator enters in the file memory or data base of the computer 47, through the medium of the keyboard, the configuration of the physical plant (operation 121) and the description of all the manufacturing processes that the cell will have to be able to carry out on request (operation 122). Another input is supplied by the planning, which defines the present work plan (number of parts and type) to be executed in the course of the current working shift (operation 123). Finally, a third input can give the system operating commands of different types (operation 124). Such commands comprise, for example:
- disconnecting one or more subsystems by putting them into semi-automatic or manual operation;
- modifying the priority of machining of some parts;
- monitoring the state of progress of work on the batch in production, (the In Process state) of the system, etc. The output of the computer 47 allows requesting the system for visual display of reports relating to the quantities of major interest, such as utilization of the machines, the course of throughput of the system, state of the statistical alarms, etc. (operation 126).

The data base is accessed through the writing of a program by means of macrolanguage which, with the use of specific high-level instructions, permits modification and characterization of the data. Not only the static relations between physical entities and data are defined in the data base, but also dynamic relations due to the triggering of events.

The network events handling level ENM 102 (Figs. 5 and 9) handles events as they occur by means of the operating system, adapting itself to the definitions given in the data base. By this means, there are stored in real time and rendered available, apart from the physical entities, the data and their mutual static relations, a whole series of data on the control of menufacture. Such data can be addressed to the user through the medium of the user interface of the MASTER. Among the functions of the latter, in fact, the report function takes charge of handling the presentation to the user of the data selected by him. The user can thus choose which data, among the data made available in the data base, is considered important for the purposes of the control of manufacture, in what mathematical/statistical form it must be processed, in what graphic and paper form it must be presented. The report function of the MASTER thus permits of presenting pages with graphics in a graphic window and numerical/statistical data on the manufacturing in process. In the handling of a cell, the MASTER takes decisions based solely on the current situation of the plant, following the machining instructions described in the data files. This obviously presupposes that a preceding decision process has equipped the machines and structured the processes in such manner as to optimize the productivity of the system.

Representation of the manufacturing process is effected in accordance with a model which ensures great flexibility and reliability at the same time. Firstly, there are described the objects that the system will have to work, for example, in an engineering works, the pallet-equipment-parts assembly. With each assembly is associated its own machining cycle, that is to say the operations which it undergoes in the system and which cause the passage thereof through a sequence of states (e.g. rough, semi-finished, finished, washed, etc. part). A part which is in one state can generally undergo various operations. An operation is identified by the machine tool on which it is carried out and by the partial program initiated.

Considerable flexibility is provided in the choices which the user can specify in relation to the routeing which a parts pallet must undergo starting from a given state. That is, he can choose the machine tool to go to (among "n" machines which are free and compatible with its machining cycle) on the basis of a percentage criterion (30% of the pallets in machine A, 70% in B), or a priority criterion (serve in order machines B, A, C, D) and still others.

The user can choose between various scheduling routines present in a software library, utilizing the desired algorithm, for example, for realizing a "constant mix", "simultaneous batches" production and so on.

Referring to Fig. 11, there will now be described the flow of the machining operations of a part in the machining cell of Fig. 3. There is indicated by M1 (Fig. 11) the rough part moment, by M2 the moment of a part machined by one of the three machining centres, for example the machining centres 53A, 53B and 53C of Fig. 3. M3 indicates the moment of a part measured by the apparatus 61 and M4 indicates the moment of a part unloaded in a loading or unloading station.

Moreover, P1 indicates the partial program for commanding variation on the part of each centre, P2 indicates the partial measuring program and P3 indicates the partial program of unloading and storage in the store 74 by the robot 66.

The cell handler routes each part M1 presented by the robot 66 to one of the machining centres which is available at that instant which executes the partial program P1. This selective routeing is indicated in Fig. 11 by the three paths P1.1, P1.2, P1.3.

After the machining, the part M2 is routed to the measuring apparatus 61, which executes the partial program P2. A single apparatus 61 being present, there is a single routeing indicated by P2.1. After the measuring operation, the part M3 is routed through the medium of the robot 66 to the loading or unloading station following the partial program P3. Here must be selected the operation of unloading,for which reason the path P3.1 is shown in Fig. 11.

From what has been seen before, it is clear that the architecture integrated in a structure CIM allows the formation of flexible inspection, quality control and calibration cells in communication with all the environments of the factory in the most rapid and reliable manner. The report capabilities may be situated at any point of the factory.

The extreme modularity of the software allows of having resident in the same personal computer various applications which rotate in multitasking, including the handling of the network and of other programs of large size. This enables integration with the use of the network also on personal computers already dedicated to other tasks (handling of processes, special control machines, host of dedicated machines, etc.), which can be handled as separate tasks.

## Claims

1. Architecture of an integrated system for the control of an industrial manufacturing works, comprising at least one manufacturing cell having a series of working and materials moving machines, each associated with a corresponding programmable control unit, the said units being subdivided into a plurality of groups each handled by a corresponding computer programmed for direct handling of the group, in which the said direct handling computers are controlled by a further computer programmed for handling the manufacturing cell, and in which the computer handling the cell and the direct handling computers are connected to a local data transmission network, characterized in that each of the said computers is a personal computer which is standard in industry and the said local network is a network comprising a common transmission channel, with contentious access and polling of the common channel, whereby a rapid and efficient exchange of data and programs between the computers is obtained.

2. Architecture as in claim 1, characterized in that to the said network there is moreover connected a visual handling personal computer comprising a graphics VDU adapted to effect the processing of images in real time and programmed with the function of visual monitoring of the status of the system, the said vision handling computer being also connected to the common channel of the said local network.

3. Architecture as in claim 1 or 2, characterized in that the monofunctional operating system of each of the said personal computers is modified by a program level for support of industrial applications (SAI) such as to allow multifunctional (multitasking) operation.

4. Architecture as in claim 3, characterised in that the said program level (SAI) comprises a series of modules, each of the said personal computers being loaded with a selection of the said modules for characterizing the functions thereof.

5. Architecture as in claim 4, characterized in that the said program level comprises a file module (data base) resident in the cell handling computer, in which are recorded the characteristics of a series of manufacturing and materials moving machines and the characteristics of a series of manufacturing processes, because of which the programming of a specific manufacturing operation is effected simply by entering in a module for description of the manufacturing operation the names of the individual machines and of the individual manufacturing processes.

6. Architecture as in claim 5, characterized in that each of the said computers is moreover provided with a second specific program level for the definition of the environment of each computer, the said second level comprising a first series of applications always active in the system and a second series of applications which can be activated by the operator for carrying out specific tasks.

7. Architecture as in claim 6, characterized in that the first series of applications of the said second level for the computer handling the cell comprises at least a cell handling module, a module for handling alarms, a module for collecting information on the manufacturing carried out and on the history of the individual machines and a module for checking and controlling the status of the cell hardware which can be activated on request of the operator.

8. Architecture as in claim 7, characterized in that the said first series of applications for the computer handling the cell moreover comprises a module for visually displaying the situation of the cell which can be called by the cell operator and a module for saving and updating the image of the status of the system in a mass memory.

9. Architecture as in any one of claims 6 to 8, characterized in that the first series of applications of the said second level for each of the said direct handling computers comprises the said checking and control module, a module controlling operations on data and a module for transmitting messages to the control units connected to it.

10. Architecture as in any one of claims 7 to 9, characterized in that the first series of applications of the said second level for the said vision handling computer comprises the said checking and control module, an image analysis module and a module for transmitting data derived from the analysis of the image to the cell handling computer.

11. Architecture as in claim 10, characterized in that each of the said computers is moreover provided with a further program level adapted to produce the communication environment between the various functions by activating them in response to the individual events which gradually occur, because of which the programmer can produce a specific application program by resorting to the programming primitives placed at his disposal by the said level SAI.

FIG.1

32
CIM
28
CAD CAP    SGP
29    31
42
FMS    FMS
27
48
FMC    FMC
24
26
23
21
22

FOREGROUND
S.A.I.
BACKGROUND
101
99
102
ENM

FIG.5

S.O.
L.C.V.    L.M.
G.M.S.    MS-DOS    S.L.M.
D.B.    U.I.M.
99

FIG.6

EP 0 364 138 A2

FIG.2

FIG.3

85
83
84
FIELD HANDLING
76
47
78
77
49
81
80
82
48
49'

59A
59B
59C
59D
56
54
53B
53C
53D
57
58
53A

STORE
69
70
71
66
68
72
WASHING
63
64
67
MEASUR-ING
61
62
73
STORE
74
75

EP 0 364 138 A2

FIG.4

BLENDING

MATERIAL WITHDRA--WAL

CARDING

COMBING

SPINNING

DRAWING

SPINDLE FRAMES

EP 0 364 138 A2

FOREGROUND

| INFORMATION ACQUISITION (112) | WATCH-DOG CONTROLLER (108) | REPORT (110) | HANDLING AND ALARM DISPLAY (109) | INFORMATION OUTPUT SYSTEM (113) |
| --- | --- | --- | --- | --- |
| | CELL HANDLER (106) | CELL SITUATION DISPLAY (107) | CELL SITUATION SAVING (111) | |

OFF-LINE MENUS

BACKGROUND

114

FIG.7

| STATIC GENERIC INFORM. | |
| --- | --- |
| STATIC PLANT INFORM. | DYNAMIC PLANT INFORM. |
| STATIC PROCESS INFORM. | DYNAMIC PROCESS INFORM. |

FIG.8

FIG.9

**FRONT-END HANDLER** 49'
- WD — 108
- OPERATION ON FILES — 118
- COMMAND TRANSMIS. — 117
- ENM — 102
- 104

**GC** 110
**REP** 47
**VC** 109
**WD** 108 — 106
**CSS** 111 — 108
**VA** 107
ENM — 102
(CELL HANDLER) — 120
98

**VISIO HANDLER** 83
- WD — 108 — 119
- IMAGE ANALYSIS — 102
- VISION TRANSMIS. — 120
- ENM — 102
- 103

PLANNING

ALARMS
SYNOPTIC REPORTS
STATISTICS — 126

124

CONDUCTING
MANUAL
PRIORITY
MODIFICATION

123

WORK PLAN
No. PARTS
TYPE

CELL HANDLER

47

MEMORY
UNIT

PLANT CONFIGUR
- MACHINES
- TRANSPORTS

121

PROCESSES
-MANUFACTURING
-INSTRUMENTAL
-ADDITION

122

FIG.10

FIG.11